# EUROPEAN PATENT APPLICATION

(11) **EP 2 824 298 A1**
(43) Date of publication of application: **14.01.2015**
(21) Application number: 14173643.9
(22) Date of filing: 24.06.2014
(51) Int. Cl.: F01N 3/28, C04B 35/622, C04B 35/628, C04B 35/634, C04B 35/638, G01Q 60/26, G01N 3/56

(54) **Inorganic fiber, method of producing inorganic fiber aggregate, holding sealing material, and exhaust gas purifying apparatus**

(30) Priority: 12.07.2013 JP 2013146765
(71) Applicant: Ibiden Co., Ltd., Ogaki-shi Gifu 503-8604 (JP)
(72) Inventor: Nishi, Akihito, GIFU, 503-8559 (JP); Kitamura, Yoji, GIFU, 503-8559 (JP)
(74) Representative: Hoffmann Eitle

(57) **Abstract**

The present invention provides inorganic fibers configured to constitute an inorganic fiber aggregate (holding sealing material) having a high surface pressure. The present invention relates to inorganic fibers configured to constitute a holding sealing material intended to be used in an exhaust gas purifying apparatus. The inorganic fibers have a surface having a friction coefficient of 0.5 or greater, the friction coefficient being measured with a scanning probe microscope.

## Description

### TECHNICAL FIELD

The present invention relates to inorganic fibers; a method of producing an inorganic fiber aggregate; a holding sealing material; and an exhaust gas purifying apparatus.

### BACKGROUND ART

Exhaust gases discharged from internal combustion engines (e.g., diesel engines) contain particulate matter (hereinafter, also referred to as PM). In recent years, the PM has been a problem as it is harmful to the environment and human bodies. Since exhaust gases also contain harmful gas components such as CO, HC and NOx, the influence of the harmful gas components on the environment and human bodies has also been concerned.

In view of these, there have been proposed various exhaust gas purifying apparatuses intended for collecting PM in exhaust gases and for converting the toxic gas components. These exhaust gas purifying apparatuses include: an exhaust gas-treating body made of porous ceramics such as silicon carbide and cordierite; a casing for accommodating the exhaust gas-treating body; and a holding sealing material that is made of an inorganic fiber aggregate and is disposed between the exhaust gas-treating body and the casing. This holding sealing material is used mainly for purposes such as protection of the exhaust gas-treating body from damage that may be caused by contact between the exhaust gas-treating body and the casing surrounding the exhaust gas-treating body as a result of vibrations and impacts during travel of an automobile or the like; and prevention of exhaust gas leakage from space between the exhaust gas-treating body and the casing. Therefore, the holding sealing material is required to increase surface pressure, which is generated by the repulsive force due to compression, to reliably hold the exhaust gas-treating body.

In one conventionally known method for producing such an inorganic fiber aggregate, a ceramic spinning liquid is ejected from a nozzle, extended, hot-air dried, and thereby formed into fibers to provide a ceramic fiber precursor sheet. The sheet is then horizontally placed on a conveyer, degreased, and fired to provide a ceramic fiber sheet (see Patent Literature 1, for example).

### CITATION LIST

### Patent Literature

Patent Literature 1: JP 2003-41478 A

### SUMMARY OF INVENTION

### - Technical Problem

However, when used as a holding sealing material, the inorganic fiber aggregate produced by the method disclosed in Patent Literature 1 shows an insufficient surface pressure. Therefore, a method of producing an inorganic fiber aggregate (holding sealing material) having a high surface pressure is demanded.

The present invention is devised to solve the above problem and aims to provide inorganic fibers configured to constitute an inorganic fiber aggregate (holding sealing material) having a high surface pressure; a method of producing an inorganic fiber aggregate capable of improving surface pressure; a holding sealing material including the inorganic fiber aggregate; and an exhaust gas purifying apparatus including the holding sealing material.

### - Solution to Problem

In order to achieve the above purposes, the inorganic fibers of the present invention are inorganic fibers configured to constitute a holding sealing material intended to be used in an exhaust gas purifying apparatus. The inorganic fibers have a surface having a friction coefficient of 0.5 or greater, the friction coefficient being measured with a scanning probe microscope.

The inorganic fibers of the present invention have a surface having a friction coefficient of 0.5 or greater. If an inorganic fiber aggregate of these high friction inorganic fibers is used as a holding sealing material, contact points of the fibers are less likely to move. This allows the fibers to bend with the contacting points serving as supporting points. As a result, the fibers can store compression energy as springs do, increasing surface pressure (restoring force) of the holding sealing material. If a small external force is applied to the holding sealing material, the relative positions of the fibers do not largely change. If an excessive eternal force is applied to the holding sealing material, the relative positions of the fibers change flexibly, decreasing the stress. This prevents the inorganic fibers from breaking. Accordingly, the inorganic fibers of the present invention used as the holding sealing material can improve surface pressure and strength at break.

The inorganic fibers of the present invention preferably have a surface having an arithmetic average roughness Ra of 3 nm or greater. The fact that the arithmetic average roughness Ra is 3 nm or greater indicates that irregularities are formed on the surface of the inorganic fibers. These irregularities allow the inorganic fibers to have a surface having a friction coefficient of 0.5 or greater, thereby improving parameters such as surface pressure of the holding sealing material including the inorganic fibers as noted above.

The arithmetic average roughness Ra herein is determined in accordance with JIS B 0601-1994 and means the average of absolute values of deviations from the average line.

The inorganic fibers of the present invention preferably include alumina fibers. Alumina has a high heat resistance and thus can enhance heat resistance of the inorganic fibers.

The inorganic fibers herein mean fibers which are produced by an inorganic salt method (e.g., sol-gel method) and which are formed by a blowing method or a centrifugation method.

The method of producing an inorganic fiber aggregate of the present invention is a method of producing an inorganic fiber aggregate of the inorganic fibers of the present invention described above. The method includes the steps of: arranging, in a heating furnace, an inorganic fiber precursor sheet including a sheet-like aggregate of inorganic fiber precursors; and heating the inorganic fiber precursor sheet in the heating furnace. The step of heating includes degreasing followed by firing. The degreasing is performed at a sheet temperature-increasing rate at the internal center of the inorganic fiber precursor sheet of 30°C/min or higher.

In the method of producing an inorganic fiber aggregate of the present invention, the degreasing is performed at a sheet temperature-increasing rate at the internal center of the inorganic fiber precursor sheet of 30°C/min or higher. That is, the degreasing is performed at a high sheet temperature-increasing rate. This allows the inorganic fibers constituting the inorganic fiber aggregate to have a surface having a friction coefficient of 0.5 or greater.

The reason for this has not been clarified but is presumably as follows. The rapid heating of the inorganic fiber precursor sheet in the degreasing promotes crystallization of the inorganic fibers. At the same time, a large amount of decomposed gas is generated from the inside of the inorganic fiber precursor sheet. As a result, irregularities are formed on the surface of the inorganic fibers, allowing the inorganic fibers to have a surface having a friction coefficient of 0.5 or greater.

In the heating step in the method of producing an inorganic fiber aggregate of the present invention, the inorganic fiber precursor sheet may be continuously heated by conveying the sheet, which is in the form of a continuous sheet, a cut batch, or other forms, through the heating furnace by a transport mechanism. In this case, the inorganic fiber aggregate can be continuously produced.

The phrase "the form of a cut batch" herein means that the sheet is cut such that the sheet length in the direction of transport is not more than two times the sheet length in the width direction.

In the arranging step in the method of producing an inorganic fiber aggregate of the present invention, the inorganic fiber precursor sheet may be arranged in the heating furnace such that the air current generated in the heating furnace by the heating should pass through the heating furnace contacting the surface of the inorganic fiber precursor sheet. In the case of this arrangement, decomposed gas generated from the inside of the inorganic fiber precursor sheet can be smoothly removed from the surface of the inorganic fiber precursor sheet. In addition, oxygen required for the degreasing is stably supplied to the inorganic fiber precursor sheet. As a result, an inorganic fiber aggregate including high friction inorganic fibers can be suitably produced.

In the method of producing an inorganic fiber aggregate of the present invention, the inorganic fiber precursor is preferably spun from a spinning liquid containing basic aluminum chloride, a silicon compound, an organic polymer, and water. In the method of producing an inorganic fiber aggregate of the present invention, spinning can be performed by a blowing method or a centrifugation method using the spinning liquid.

The holding sealing material of the present invention is intended to be used in an exhaust gas purifying apparatus. The holding sealing material includes an inorganic fiber aggregate of the inorganic fibers of the present invention or an inorganic fiber aggregate produced by the above-mentioned method of producing an inorganic fiber aggregate.

As described in the section of the inorganic fibers of the present invention, the inorganic fiber aggregate of high friction inorganic fibers can provide a holding sealing material having a high surface pressure.

The holding sealing material preferably further includes inorganic particles. The inorganic particles attach to the surface of the inorganic fibers and thereby form irregularities. This further increases surface pressure of the holding sealing material.

The inorganic particle content is preferably 0.01 to 3.0% by weight based on 100% by weight of the inorganic fibers. If the inorganic particle content is 0.01 to 3.0% by weight, the holding sealing material can have a sufficiently high surface pressure. If the inorganic particle content is less than 0.01% by weight, the inorganic particles insufficiently attach to the surface of the inorganic fibers. If the inorganic particle content is more than 3.0% by weight, the effect of improving surface pressure as a result of formation of irregularities is not produced because only a certain amount of the inorganic particles strongly attach to the surface due to charges on the fiber surface.

The exhaust gas purifying apparatus of the present invention includes a casing; an exhaust gas-treating body housed in the casing; and a holding sealing material wound around the exhaust gas-treating body and disposed between the exhaust gas-treating body and the casing. The holding sealing material is the holding sealing material of the present invention.

The exhaust gas purifying apparatus of the present invention includes an inorganic fiber aggregate of high friction inorganic fibers as a holding sealing material. Owing to the holding sealing material with a high surface pressure, the exhaust gas purifying apparatus can have good holding properties for the exhaust gas-treating body.

### BRIEF DESCRIPTION OF DRAWINGS

Fig. 1 is a schematic perspective view of an example of the holding sealing material of the present invention.
Fig. 2 (a) is a schematic perspective view of an example of the exhaust gas purifying apparatus of the present invention. Fig. 2 (b) is a cross-sectional view of the exhaust gas purifying apparatus shown in Fig. 2(a) along the line A-A.
Fig. 3 is a SEM image of an inorganic fiber of Example 1.
Fig. 4 is a SEM image of inorganic fibers of Comparative Example 1.
Fig. 5 is a graph showing a friction coefficient of the surface of inorganic fibers of Example 1 and Comparative Example 1.
Fig. 6 is a graph showing an arithmetic average roughness of the surface of inorganic fibers of Example 1 and Comparative Example 1.
Fig. 7 is a graph showing a surface pressure of inorganic fiber aggregates of Example 1 and Comparative Example 1.
Fig. 8 is a graph showing relation between inorganic particle content and surface pressure.

### DESCRIPTION OF EMBODIMENTS

In the following, the present invention will be described in detail. The invention is not limited to the description below, and appropriate changes may be made without departing from the scope of the present invention.

First, the inorganic fibers of the present invention are described.

The inorganic fibers of the present invention are configured to constitute a holding sealing material intended to be used in an exhaust gas purifying apparatus. The inorganic fibers have a surface having a friction coefficient of 0.5 or greater. The friction coefficient is measured with a scanning probe microscope.

The friction coefficient of the surface of the inorganic fibers can be measured by the following method. The friction coefficient herein is measured when no inorganic particle or the like is attached to the surface of the inorganic fibers.
(1) A test inorganic fiber is prepared. For example, for measuring the friction coefficient of the surface of inorganic fibers constituting an inorganic fiber aggregate (holding sealing material), an inorganic fiber is taken from the inorganic fiber aggregate with tweezers.
(2) The prepared inorganic fiber is placed under a scanning probe microscope (e.g., SPM-9700 produced by SHIMADZU Corp.).
(3) A cantilever (e.g., OMCL-RC800PSA-W produced by Olympus Corp.) is set in the scanning probe microscope. An atomic force microscope (AFM) measurement and a lateral force microscope (LFM) measurement are performed.
(4) Normal force N on the surface of the inorganic fiber is measured by the AFM measurement.
(5) Frictional force (lateral force) is determined from the amount of torsion of the cantilever measured by the LFM measurement.
(6) The friction coefficient µ is calculated from the normal force N and the frictional force F in accordance with the equation "µ = F/N".

The friction coefficient of the surface of the inorganic fibers of the present invention is 0.5 or greater, preferably 0.7 or greater, and more preferably 0.9 or greater. If the friction coefficient is 0.5 or greater, the holding sealing material including the inorganic fibers can have a high surface pressure.

A greater friction coefficient gives a greater surface pressure to the holding sealing material including the inorganic fibers. Though the upper limit of the friction coefficient is not particularly limited, the friction coefficient may be 1.4 or smaller. If the friction coefficient is greater than 1.4, movement of the fibers is significantly limited, which may deteriorate the shape forming properties of the aggregate.

The arithmetic average roughness Ra of the surface of the inorganic fibers of the present invention is preferably 3 nm or greater, more preferably 3.5 nm or greater, and even more preferably 4 nm or greater.

A greater arithmetic average roughness Ra gives a greater surface pressure to the holding sealing material including the inorganic fibers. Though the upper limit of the Ra is not particularly limited, the Ra may be 8 nm or smaller. If force is applied to the inorganic fibers having a Ra of greater than 8 nm, the stress caused by the force may be concentrated at one point. This may reduce the strength of the fibers.

The arithmetic average roughness Ra of the surface of the inorganic fibers can be measured by the AFM measurement for measuring the friction coefficient of the surface of the inorganic fibers. Therefore, it is preferred that the arithmetic average roughness Ra of the surface of the inorganic fibers and the friction coefficient of the surface of the inorganic fibers are measured at the same point.

The inorganic fibers of the present invention preferably include, for example, alumina fibers, alumina-silica fibers, silica fibers, bio-soluble fibers, or glass fibers. Preferred among these are alumina fibers from the viewpoint of heat resistance. More preferred are alumina fibers having a mullite composition.

The alumina fibers herein refer to fibers containing 65 to 99% by weight of Al₂O₃ and 1 to 35% by weight of SiO₂. From the viewpoint of fiber flexibility, the alumina fibers preferably have a mullite crystallinity of 5% by weight or lower based on the weight of the fibers, more preferably 3% by weight or lower. The crystallinity can be measured with a usual X-ray diffraction device (e.g., D2-PHASER produced by Bruker).

By aggregating a large number of the inorganic fibers of the present invention, an inorganic fiber aggregate can be obtained. The inorganic fiber aggregate including a large number of the inorganic fibers of the present invention can be used as a holding sealing material in an exhaust gas purifying apparatus. The holding sealing material including the inorganic fiber aggregate of the inorganic fibers of the present invention and an exhaust gas purifying apparatus including the holding sealing material are also aspects of the present invention. The holding sealing material and the exhaust gas purifying apparatus are described in detail below.

The inorganic fibers of the present invention can be formed into an inorganic fiber aggregate by, for example, a method described below.

In the following, the method of producing an inorganic fiber aggregate of the above-described inorganic fibers is described. The method of producing an inorganic fiber aggregate described below is also one aspect of the present invention.

The method of producing an inorganic fiber aggregate of the present invention is a method of producing an inorganic fiber aggregate of the inorganic fibers of the present invention described above. The method includes the steps of: arranging, in a heating furnace, an inorganic fiber precursor sheet including a sheet-like aggregate of inorganic fiber precursors; and heating the inorganic fiber precursor sheet in the heating furnace. The step of heating includes degreasing followed by firing. The degreasing is performed at a sheet temperature-increasing rate at the internal center of the inorganic fiber precursor sheet of 30°C/min or higher.

First, the arranging step is performed in which an inorganic fiber precursor sheet including a sheet-like aggregate of inorganic fiber precursors is arranged in a heating furnace.

The inorganic fiber precursor sheet can be produced by any conventionally known method.

For example, if the inorganic fiber precursor sheet is a needle sheet, the sheet is preferably produced by performing the following (1-1) spinning step, (1-2) compressing step, and (1-3) needling step. If the inorganic fiber precursor sheet does not require bulk density, or if compressing or needling is performed in subsequent steps, either one or both of the compressing step and the needling step can be omitted.

### (1-1) Spinning step

Inorganic fiber precursors are spun from a spinning liquid containing basic aluminum chloride, a silicon compound, an organic polymer, and water.

Specifically, an aqueous solution of basic aluminum chloride having a specific Al content and a specific Al/Cl ratio (atom ratio) is prepared. The aqueous solution is mixed with silica sol such that inorganic fibers after firing have a compositional ratio of Al₂O₃:SiO₂ = 60:40 to 80:20 (weight ratio). In addition, an adequate amount of an organic polymer is added in order to improve moldability. Thereby, a mixture is prepared.

The prepared mixture is concentrated to provide a mixture for spinning. The mixture for spinning is spun by a blowing method into inorganic fiber precursors having an average fiber diameter of 3 to 10 µm.

The blowing method herein means a method for spinning an inorganic fiber precursor, the method including extruding a mixture for spinning into high velocity gas (air) stream blown from an air nozzle through a nozzle for supplying spinning mixtures.

Suitable examples of the silicon compound include silica sol. Water-soluble silicon compounds such as tetraethyl silicate and water-soluble siloxane derivatives can also be used.

Suitable examples of the organic polymer include water-soluble polymer compounds such as polyvinyl alcohol, polyethylene glycol, and polyacrylamide.

### (1-2) Compressing step

Next, the inorganic fiber precursors are compressed to produce a continuous sheet-like product having a predetermined size.

### (1-3) Needling step

A needle board to which needles are attached at a density of 7 to 30 pcs/cm² is placed above one of the surfaces of the sheet-like product. Needle punching is carried out by allowing the needle board to descend and ascend once along the thickness direction of the sheet-like product so that a needle-punched body is manufactured. Upon the needle punching, each needle is allowed to penetrate the sheet member until a barb formed on the tip of the needle has completely protruded from the opposite surface of the sheet-liked product.

Needle penetration marks are formed at the sites where the needles are penetrated on the surface of the needle-punched body obtained by the needle punching, and moreover, needle protrusion marks are formed at the site where the needles are protruded from the surface of the needle-punched body. Here, at each of the needle protrusion marks, a bundle-shaped inorganic fiber precursor formed of the inorganic fiber precursor oriented in a closed loop configuration is formed.

Thereby, an inorganic fiber precursor sheet can be prepared.

In the arranging step, the method of arranging the inorganic fiber precursor sheet in the heating furnace is not particularly limited. The sheet may be in the form of a continuous sheet or in the form of a cut batch. The sheet may be disposed horizontally, or a plurality of inorganic fiber precursor sheets may be disposed in a stack. The inorganic fiber precursor sheet may be arranged such that air current generated in the heating furnace by the heating can pass through the furnace contacting the surface of the inorganic fiber precursor sheet. Hereinafter, this arrangement may also be referred to as "passing-through arrangement."

If the inorganic fiber precursor sheet is arranged in the heating furnace such that air current generated in the heating furnace by the heating can pass through the furnace contacting the surface of the inorganic fiber precursor sheet, the air heated in the heating furnace forms air current, which passes between the wall of the heating furnace and the inorganic fiber precursor sheet and between inorganic fiber precursor sheets contacting the surface of the inorganic fiber precursor sheet.

Accordingly, arrangements which do not allow the air current to pass through the furnace contacting the surface of the inorganic fiber precursor sheet do not fall under the passing-through arrangement. Specifically, horizontally disposing the inorganic fiber precursor sheet and arranging a plurality of inorganic fiber precursor sheets with no gap therebetween do not fall under the passing-through arrangement.

Any method can be employed for arranging the inorganic fiber precursor sheet in the furnace such that air current generated in the heating furnace by the heating can pass through the furnace contacting the surface of the inorganic fiber precursor sheet. Examples of the method include hanging the inorganic fiber precursor sheet in the heating furnace; and arranging the inorganic fiber precursor sheet such that the main face of the inorganic fiber precursor sheet can be parallel to the direction of gravitational force.

The inorganic fiber precursor sheet may be hung by, for example, forming two slits several millimeters inside an edge (the upper side edge) of the sheet, passing pipes through the slits, and then placing the pipes on a jig.

In the case of arranging the inorganic fiber precursor sheet such that the main face of the inorganic fiber precursor sheet can be parallel to the direction of gravitational force, the direction of the gravitational force refers to the direction in which objects fall by gravity. Thus, the sheet does not necessarily need to be parallel to the wall of the heating furnace.

If a plurality of inorganic fiber precursor sheets are arranged in the passing-through arrangement, the sheets are preferably arranged in the heating furnace such that a predetermined distance d can be formed between the main surfaces of the inorganic fiber precursor sheets.

The distance d is preferably 30 to 100 mm and more preferably 45 to 60 mm.

If the distance d is smaller than 30 mm, the air current generated in the heating furnace by the heating is less likely to pass between the inorganic fiber precursor sheets, making it difficult to remove decomposed gas. If the distance d is larger than 100 mm, the number of inorganic fiber precursor sheets that can be heated at one time in the heating furnace is too small, resulting in poor productivity.

The similar effects can be obtained also in other passing-through arrangements such as injecting air in the heating furnace or diagonally arranging the inorganic fiber precursor sheet because, also in these arrangements, the air current generated in the heating furnace by the heating passes through the furnace contacting the surfaces of the inorganic fiber precursor sheet. The sheet can be diagonally arranged by, for example, diagonally fixing the lower edge of the inorganic fiber precursor sheet, or other methods.

Not only in the passing-through arrangement but also in any other arrangement, it is not always necessary to arrange a plurality of inorganic fiber precursor sheets in the heating furnace in the arranging step. The number of inorganic fiber precursor sheets arranged in the furnace in the heating step may be one.

If a plurality of inorganic fiber precursor sheets are arranged in the heating furnace, the number of inorganic fiber precursor sheets arranged in the heating furnace can be appropriately changed depending on the size of the heating furnace. The number is preferably 3 to 10, and more preferably 6 to 8 from the viewpoint of productivity.

The size of the inorganic fiber precursor sheet is not particularly limited and can be appropriately changed depending on the size of the heating furnace.

The thickness of the inorganic fiber precursor sheet is preferably 20 to 100 mm, and more preferably 30 to 60 mm from the viewpoint of strength and usefulness.

The inorganic fiber precursors preferably include, for example, alumina fiber precursors, alumina-silica fiber precursors, or silica fiber precursors. Preferred among these are alumina fiber precursors, and more preferred are alumina fiber precursors having a mullite composition, from the viewpoint of heat resistance.

The alumina fiber precursor herein means a fiber precursor containing 65 to 99% by weight of Al₂O₃ and 1 to 35% by weight of SiO₂.

In the arranging step, the inorganic fiber precursor sheet is preferably arranged in the heating furnace by, for example, previously mounting the sheet on a jig and then conveying it with a transport mechanism in one direction.

The transport mechanism is not particularly limited, but preferably a roller conveyor or a metal mesh conveyor, and more preferably a roller conveyor. The material of the conveyor is preferably a heat resistant material sufficiently resistant to temperatures in the furnace and particularly preferably a SiC material.

After the arranging step, the heating step is performed in which inorganic fiber precursor sheet is heated in the heating furnace.

Herein, a first-step heating performed at a relatively low temperature (about 800°C) is defined as degreasing, and a second-step heating performed at a temperature (about 1200°C) higher than the temperature employed in the degreasing is defined as firing.

By the degreasing prior to the firing, organic components such as polyvinyl alcohol and chlorine components contained in the aqueous solution of basic aluminum chloride are generated in the form of decomposed gas and removed from the inorganic fiber precursor sheet.

In the method of producing an inorganic fiber aggregate of the present invention, a high-sheet temperature-increasing rate is employed in the degreasing. Specifically, the degreasing is performed at a sheet temperature-increasing rate at the internal center of the inorganic fiber precursor sheet of 30°C/min or higher.

If a high sheet temperature-increasing rate is employed in the degreasing, a large amount of decomposed gas is generated from the inorganic fiber precursor sheet, leading to formation of many irregularities on the surface of the inorganic fibers. This presumably increases the friction coefficient of the surface of the inorganic fibers. Therefore, the sheet temperature-increasing rate in the degreasing is 30°C/min or higher, preferably 33°C/min or higher, and more preferably 35°C/min or higher. The upper limit of the sheet temperature-increasing rate in the degreasing is not particularly limited, but may be 40°C/min or lower because it is technically difficult to excessively increase the sheet temperature-increasing rate.

The sheet temperature-increasing rate in the degreasing herein means a value calculated from time required for the temperature of the internal center of the inorganic fiber precursor sheet to increase from 100°C to 800°C (if the maximum temperature is lower than 800°C, from 100 to the maximum temperature).

The temperature at the internal center of the inorganic fiber precursor sheet herein means, assuming that the inorganic fiber precursor sheet is divided in the thickness direction into three equal parts, an upper layer sheet, a middle layer sheet, and a lower layer sheet, the temperature of the center of the main face of the middle layer sheet. The temperature can be measured with a sheath type thermocouple, for example. The measurement method is not particularly limited as long as the temperature of the center can be measured. The center of the main face herein means the center of gravity of the main face.

The method of heating the inorganic fiber precursor sheet in the heating furnace is not particularly limited, and examples thereof include the following two methods.

In the first method, the inorganic fiber precursor sheet is conveyed into the heating furnace using a transport mechanism, then held for a certain period of time, and thereafter conveyed from the heating furnace using the transport mechanism again.

In the case of employing this method, it is preferred that the inorganic fiber precursor sheet is held in the heating furnace for 2 to 4 hours. The maximum heating temperature in the degreasing is preferably 700 to 850°C. The maximum heating temperature in the firing is preferably 1100 to 1300°C.

In the second method, the inorganic fiber precursor sheet in the form of a continuous sheet or a cut batch is conveyed through the heating furnace using a transport mechanism. In this case, the inorganic fiber precursor sheet can be continuously heated.

In the case of employing this method, the conveying speed is not particularly limited as long as the above-mentioned sheet temperature-increasing rate is achieved. The conveying speed can be appropriately selected depending on conditions such as the composition of the fibers.

The maximum heating temperature in the degreasing is preferably 700 to 850°C. The maximum heating temperature in the firing is preferably 1100 to 1300°C.

Through the above steps, an inorganic fiber aggregate can be obtained.

The inorganic fiber aggregate produced by the method of producing the inorganic aggregate of the present invention can be used as a holding sealing material in an exhaust gas purifying apparatus. The holding sealing material including the inorganic fiber aggregate produced by the method of producing the inorganic aggregate of the present invention and an exhaust gas purifying apparatus including the holding sealing material are also aspects of the present invention. The holding sealing material and the exhaust gas purifying apparatus are described in detail below.

The inorganic fiber aggregate also can be produced as a sheet-formed sheet by the following steps of (2-1) untangling fibers, (2-2) preparing a mixture, (2-3) sheet forming, and (2-4) heat-compressing.

### (2-1) Step of untangling fibers

The fired inorganic fiber precursor sheet is in the form of a sheet. The sheet is broken into fibers in this step of untangling fibers. This operation is typically called untangling of fibers. Untangling of fibers is carried out using a wet type pulper, for example. In this method, the sheet and water are placed in a tank equipped with blades, and the sheet is broken into fibers by rotating the blades. Thereby, fibers floating in water can be obtained.

### (2-2) Step of preparing mixture

The untangled inorganic fibers, an inorganic binder containing inorganic particles, an organic binder, a polymer flocculant, and water are mixed such that the starting material liquid can have a predetermined inorganic fiber content and stirred with a stirrer to prepare a mixture. This prepared mixture contains gelatinous fiber mass called a flock. The mixture is typically called slurry.

The inorganic binder may be, for example, alumina sol, silica sol, or a colloidal dispersion thereof. Since commercial liquid concentrates of these inorganic binders may have too high a concentration, they are preferably diluted to an inorganic particle concentration of about 0.5 to about 5% by weight (in terms of the solids content) when used. If the inorganic binder is alumina sol, the alumina sol preferably contains alumina particles which include bead-like secondary particles in the aqueous solution (inorganic binder) . Examples of such alumina sol include AS550 (produced by Nissan Chemical Industries, Ltd.).

When bead-like alumina particles are used, the secondary particles easily entangle each other and attach to the surface of the inorganic fibers while joining each other. As a result, the inorganic particles more easily uniformly attach to the surface of the inorganic fibers. This presumably improves surface pressure of the holding sealing material.

The organic binder is preferably one of those described above, but can be appropriately selected.

### (2-3) Step of sheet forming

Subsequently, the mixture is poured into a mold having a mesh for filtering formed on the bottom thereof. Water in the mixture is removed through the mesh and thereby a material sheet is prepared.

If necessary, water may be forcibly suctioned with a suction pump, vacuum pump, or the like from the underside of the mold through the mesh for filtering.

### (2-4) Step of heat-compressing

The material sheet is heat-compressed under predetermined conditions to produce an inorganic fiber aggregate (sheet) having a predetermined bulk density. The heating time can be appropriately shortened by operations such as decreasing the pressure or blowing air of about 130°C to the sheet. Through this step, the alumina fibers and silica fibers are bonded to each other through the inorganic binder, holding the shape of a mat.

Through the above steps, an inorganic fiber aggregate sheet can be produced.

In the following, the holding sealing material of the present invention is described.

The holding sealing material of the present invention is a holding sealing material intended to be used in an exhaust gas purifying apparatus. The holding sealing material of the present invention includes an inorganic fiber aggregate of the above-described inorganic fibers of the present invention or an inorganic fiber aggregate produced by the method of producing an inorganic fiber aggregate of the present invention.

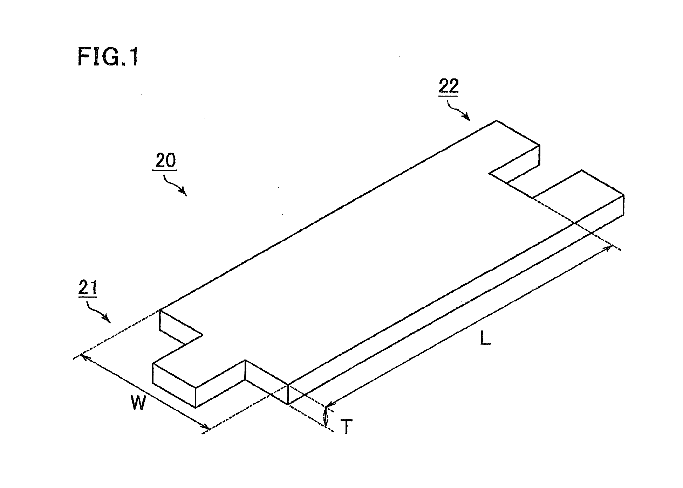

Fig. 1 is a schematic perspective view of an example of the holding sealing material of the present invention.

A holding sealing material 20 shown in Fig. 1 is a mat having a rectangular shape in a plan view and having a predetermined length in the longitudinal direction (indicated by an arrow L in Fig. 1), a predetermined width (indicated by an arrow W in Fig. 1), and a predetermined thickness (indicated by an arrow T in Fig. 1).

The holding sealing material 20 has a projected portion 21 at one of its ends in the longitudinal direction, and has a recessed portion 22 at the other end. The projected portion 21 and the recessed portion 22 have shapes that allow the projected portion 21 and the recessed portion 22 to fit each other when the holding sealing material 20 is wound around an exhaust gas-treating body for assembling exhaust gas purifying apparatus described later.

The length of the mat in the longitudinal direction herein does not take into account the dimensions of the projected and recessed portions formed at the ends of the mat.

The length L of the mat in the longitudinal direction is preferably within a range of ± 95 mm of the length of the periphery of the pillar-shaped exhaust gas-treating body around which the mat is to be wound. If the length L of the mat in the longitudinal direction is within the range, the holding sealing material can be wound around the exhaust gas-treating body without forming a gap. Moreover, misalignment and crinkle of the holding sealing material can be prevented.

The width W of the mat is preferably 3 to 30 mm shorter than the length of the exhaust gas-treating body in the longitudinal direction.

The thickness T of the mat is preferably 5 to 40 mm.

The holding sealing material 20 is produced by cutting a holding sealing material having a predetermined shape from an inorganic fiber aggregate including an aggregate of the above-described inorganic fibers of the present invention or from an inorganic fiber aggregate produced by the method of producing an inorganic fiber aggregate of the present invention.

The method and apparatus used for cutting the inorganic fiber aggregate are not particularly limited. Any conventionally known method can be employed.

For example, the aggregate can be cut with a punching plate. In this case, the punching blade may be a thomson blade with a blade designed to have the same shape as the punching pattern for punching the inorganic fiber aggregate. The punching apparatus may be a hydraulic press machine or the like. The method of cutting the inorganic fiber aggregate can be appropriately selected. Examples of cutting methods other than punching out the inorganic fiber aggregate include cutting the inorganic fiber aggregate by water jet or ultrasonic wave or with a drum type rotating blade. The cutting step can be omitted if the mold used in the step (2-3) of sheet forming has a predetermined shape.

Prior to the cutting step, the compressing step and/or the needling step may be optionally performed. Moreover, a binder such as an organic binder may be attached to the inorganic fiber aggregate. The binder attached to the inorganic fiber aggregate allows the inorganic fibers to be more strongly interlaced and also reduces the bulk size of the mat.

Thereafter, the inorganic fiber aggregate is dried so that water in the binder can be removed. The drying may be performed at 95 to 150°C for 1 to 30 minutes, for example. Through the drying step, an inorganic fiber aggregate with a binder attached thereto can be produced.

Examples of the method of attaching the binder to the inorganic fiber aggregate include: spraying a predetermined amount of a binder solution to the aggregate with a spray or the like; and impregnating the inorganic fiber aggregate with a binder solution.

The binder solution may be an emulsion prepared by dispersing an organic binder (e.g., an acrylic resin, a polyester resin) in water.

The amount of the organic binder to be attached to the aggregate is preferably 0.01 to 15% by weight, more preferably 0.05 to 10% by weight, and even more preferably 0.1 to 8% by weight, based on the amount of the fibers.

The binder solution may appropriately further contain an inorganic binder such as alumina sol.

The holding sealing material of the present invention preferably contains inorganic particles.

If the holding sealing material contains inorganic particles, the inorganic particles attach to the surface of the inorganic fibers constituting the holding sealing material and thereby form irregularities on the surface of the inorganic fibers. This improves the surface pressure of the holding sealing material.

The inorganic particles are not particularly limited. Examples thereof include particles of calcia, titania, silica, zirconia, alumina, yttria, ceria, and magnesia. These may be used alone or in combination of two or more thereof. Preferred among these are alumina and silica. Alumina is more preferred.

If the holding sealing material of the present invention contains inorganic particles, the inorganic particle content (the amount of inorganic particles attached to the surface of the inorganic fibers) is preferably 0.01 to 3.0% by weight, more preferably 0.3 to 2.0% by weight, and even more preferably 0.4 to 1. 5% by weight, based on 100% by weight of the inorganic fibers, from the viewpoint of improving surface pressure.

The inorganic particle content can be calculated by the process below. The weight of the fibers alone is measured before forming them into a holding sealing material. After forming the holding sealing material, the holding sealing material is placed in an oven at 600°C for at least one hour to degrease the organic binder. After the degreasing, the weight of the holding sealing material is measured. The inorganic particle content is calculated by subtracting the weight of the fibers alone from the weight of the degreased holding sealing material.

The inorganic particles preferably have an average particle diameter of 20 to 500 nm, and more preferably 20 to 200 nm, from the viewpoint of improving surface pressure.

The particle diameter of the inorganic particles is measured by the following method.

An image of the surface of an inorganic fiber is captured with an electron scanning microscope (SEM). On the image, a particle-like object observed on the surface of the inorganic fiber, where irregularities are formed, is regarded as an inorganic particle. The diameter of the particle-like object is measured as the particle diameter of an inorganic particle.

The average particle diameter of the inorganic particles is calculated by the following method.

Five inorganic fibers are taken and the particle diameter of the inorganic particles on the surface of the inorganic fibers is measured by the above method. The average (arithmetic average) of the measured values is calculated to determine the average particle diameter of the inorganic particles.

The average particle diameter of the inorganic particles can be determined by other methods, including a method in which some of the particles are collected before attaching the inorganic particles to the fibers and the average particle diameter of 50 particles is determined with a transmission electron microscope (TEM) or the like device.

The inorganic particles can be attached to the surface of the inorganic fibers by, for example, attaching inorganic binder to the inorganic fiber aggregate. As explained above, the inorganic binder may be attached during producing the sheet-formed sheet, or may be attached before the cutting.

Examples of the inorganic binder include the alumina sol, silica sol, and colloidal dispersions thereof described in the section of the step (2-2) of the method of producing an inorganic fiber aggregate of the present invention. The examples also include sols of inorganic particles such as calcia, titania, zirconia, yttria, ceria, or magnesia particles and colloidal dispersions thereof.

The average fiber diameter of the inorganic fibers constituting the holding sealing material of the present invention is not particularly limited and is preferably 1 to 20 µm, and more preferably 1 to 10 µm from the viewpoint of strength and flexibility of the holding sealing material.

The average fiber diameter of the inorganic fibers herein means a value determined by measuring, with an electron scanning microscope (SEM), the diameter of 300 inorganic fibers taken at random and calculating the average of the measured values.

The average fiber length of the inorganic fibers constituting the holding sealing material of the present invention is not particularly limited. The average fiber length is preferably 50 µm to 600 mm, and more preferably 350 to 550 µm, to form an interlaced structure.

The average fiber length of the inorganic fibers herein means a value determined by calculating the average fiber length of 300 inorganic fibers collected with tweezers randomly and carefully so that the fibers should not be broken. If the holding sealing material contains an organic binder, especially if the holding sealing material contains an organic binder and is produced through the step of sheet forming, the probability of breaking the fibers can be reduced by collecting fibers after degreasing the organic binder in an oven or the like at an ambient temperature of 600°C or higher for at least one hour. This facilitates collecting fibers.

The holding sealing material of the present invention does not necessarily consist of one mat, and may consist of a stack of two or more mats. The stacking method can be appropriately selected. Examples thereof include: applying adhesive between the mats; sewing the mats with thread; and surrounding the entire mats or at least the edge of the mats with a film.

Finally, the exhaust gas purifying apparatus of the present invention is described.

The exhaust gas purifying apparatus of the present invention includes a casing; an exhaust gas treating-body housed in the casing; and a holding sealing material wound around the exhaust gas-treating body and disposed between the exhaust gas-treating body and the casing. The holding sealing material is the holding sealing material of the present invention described above.

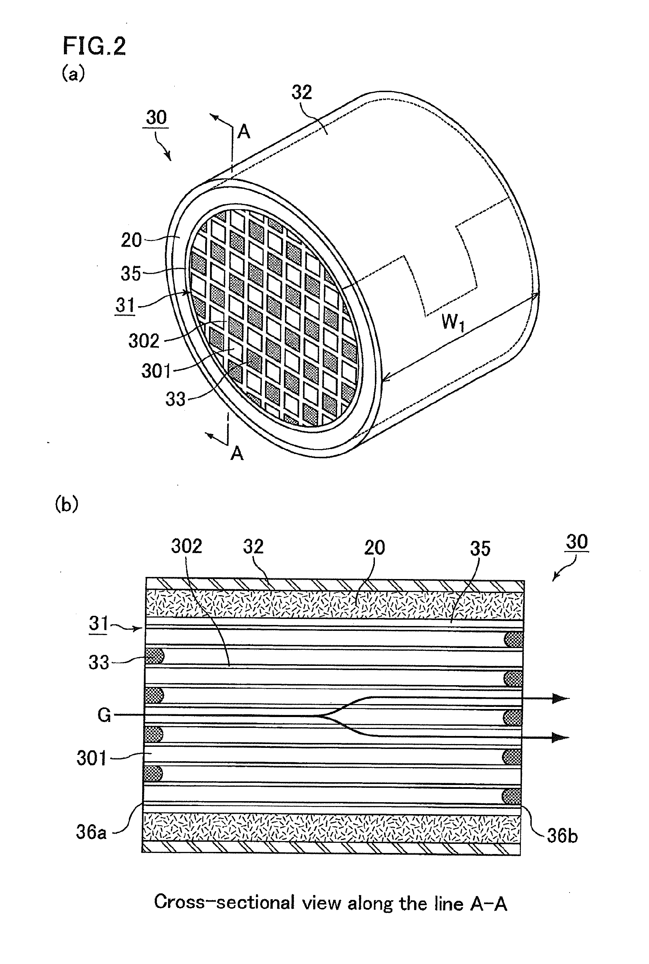

Fig. 2(a) is a schematic perspective view of an example of the exhaust gas purifying apparatus of the present invention. Fig. 2 (b) is a cross-sectional view of the exhaust gas purifying apparatus shown in Fig. 2(a) along the line A-A.

An exhaust gas purifying apparatus 30 shown in Fig. 2 (a) includes an exhaust gas-treating body 31 and a casing 32 housing the exhaust gas-treating body 31, and a holding sealing material 20 wound around the exhaust gas-treating body 31 and disposed between the exhaust gas-treating body 31 and the casing 32.

That is, the exhaust gas purifying apparatus 30 includes the holding sealing material 20 shown in Fig. 1 and the exhaust gas-treating body 31 and the casing 32 shown in Fig. 2(a).

The casing 32 shown in Fig. 2 (a) is mainly made from metal such as stainless steel and has a cylindrical shape. The inner diameter of the casing is slightly smaller than the total length of the diameter of the end of the exhaust gas-treating body 31 and the thickness of the holding sealing material 20 in the state of being wound around the exhaust gas-treating body 31. The inner diameter is substantially the same as the length of the exhaust gas-treating body 31 in the longitudinal direction (the direction indicated by a double-headed arrow W₁ in Fig. 2(a)).

The structure of the holding sealing material 20 is already described above; detailed description thereof is omitted here.

As shown in Fig. 2(a), the exhaust gas purifying apparatus 30 includes a honeycomb filter 31 in which either one of ends of each cell is sealed with a plug 33, as the exhaust gas-treating body 31.

The honeycomb filter 31 is mainly made from porous ceramic and has a cylindrical shape. The periphery of the honeycomb filter 31 is provided with a sealing material layer 35 to reinforce the peripheral portion of the honeycomb filter 31, arrange the shape of the peripheral portion, and increase the heat insulation of the honeycomb filter 31.

The shape of the exhaust gas-treating body constituting the exhaust gas purifying apparatus of the present invention is not particularly limited as long as it is a pillar shape. The exhaust gas-treating body can be of a shape other than the substantially cylindrical shape, such as a substantially cylindroid shape or a substantially rectangular pillar shape, and can be of any size.

The exhaust gas-treating body constituting the exhaust gas purifying apparatus of the present invention may be an integrated honeycomb structured body which includes a cordierite or the like and is integrally formed. Alternatively, the exhaust gas-treating body may be an aggregated honeycomb structured body which includes silicon carbide or the like and in which a plurality of pillar-shaped honeycomb fired bodies are bonded through an adhesive layer mainly containing ceramic therebetween, each of the honeycomb fired bodies having a large number of through holes placed in parallel with one another in the longitudinal direction with a separation wall interposed therebetween.

The exhaust gas-treating body constituting the exhaust gas purifying apparatus of the present invention may carry a catalyst.

The catalyst supported on the exhaust gas-treating body may be, for example, a noble metal such as platinum, palladium, or rhodium, an alkaline metal such as potassium or sodium, an alkaline earth metal such as barium, a metal oxide such as cerium oxide, or the like. Each of these catalysts may be used alone, or two or more of these may be used in combination.

In the exhaust gas purifying apparatus of the present invention, if the exhaust gas-treating body is a honeycomb structured body, end portions of each cell may not be plugged with a plug. In such a case, a catalyst such as platinum is supported on the exhaust gas-treating body and the exhaust gas-treating body serves as a catalyst carrier for converting toxic gas components such as CO, HC, and NOx contained in exhaust gases.

Passage of exhaust gases through the exhaust gas purifying apparatus having the above structure is described below with reference to Fig. 2(b).

As shown in Fig. 2(b), exhaust gas discharged out of an internal combustion engine and flowing in the exhaust gas purifying apparatus 30 (in Fig. 2(b), the exhaust gas is shown by G and the flow of the exhaust gas is shown with the arrow) flows in one cell 301 opened in an exhaust gas flowing-in side end surface 36a of the honeycomb filter 31 and passes through cell walls 302 partitioning the cell 301. At this time, PM in the exhaust gas is collected by the cell walls 302 and the exhaust gas is purified. The purified exhaust gas flows out of another cell 301 opened in an exhaust gas flowing-out side end surface 36b and is discharged outside.

The exhaust gas purifying apparatus of the present invention can be produced by the steps of: winding the holding sealing material around the exhaust gas-treating body; and housing it in a casing.

In the winding step, the holding sealing material 20 is wound around the periphery of the exhaust gas-treating body 31 such that the projecting portion 21 and the recessed portion 22 of the holding sealing material 20 are fitted with each other.

The winding step is followed by the housing step.

In the housing step, the exhaust gas-treating body 31 with the holding sealing material 20 wound therearound is pressed into the casing 32 that is mainly made of a material such as metal and has a cylindrical shape and a predetermined size.

In order for the sealing material to be compressed and to exert a predetermined repulsive force (that is, force for retaining a honeycomb filter) after the pressing, the internal diameter of the casing 32 is a little smaller than the outermost diameter of exhaust gas-treating body 31 with the holding sealing material 20 therearound. Here, the outermost diameter includes the thickness of the holding sealing material 20.

The method of housing the exhaust gas-treating body with the holding material wound therearound is not limited to a pressing method (stuffing method). A sizing method (swaging method), a clam shell method, or other methods can be employed.

In a sizing method, the exhaust gas-treating body with the holding sealing material wound therearound is inserted in the casing and then compressed from the outer periphery side so as to reduce the inner diameter of the casing. In a clam shell method, the casing is made separable into two parts of a first casing and a second casing. The exhaust gas-treating body with the holding sealing material wound therearound is placed on the first casing and covered with the second casing to be sealed.

The pressing method or sizing method is preferable among the methods for housing the exhaust gas-treating body with the holding sealing material wound therearound in the casing. This is because the pressing method and sizing method do not require two parts as casing, and therefore the number of manufacturing steps can be reduced.

The following will describe the effect of the inorganic fibers, the method of producing an inorganic fiber aggregate, the holding sealing material, and the exhaust gas purifying apparatus of the present invention.
(1) The inorganic fibers of the present invention have a surface having a friction coefficient of 0.5 or greater. If an inorganic fiber aggregate of these high friction inorganic fibers is used as a holding sealing material, the holding sealing material can have a high surface pressure (restorative force). Breaking of the inorganic fibers can also be prevented. Thus, the inorganic fibers of the present invention used in a holding sealing material can improve surface pressure and strength at break of the sealing holding material.
(2) In the method of producing an inorganic fiber aggregate of the present invention, degreasing is performed at a sheet temperature-increasing rate at the internal center of the inorganic fiber precursor sheet of 30 °C/min or higher. That is, a high sheet temperature increasing-rate is employed in degreasing. This presumably leads to formation of irregularities on the surface of the inorganic fibers, enabling the inorganic fibers constituting the inorganic fiber aggregate to have a surface having a friction coefficient of 0.5 or greater.
(3) The holding sealing material of the present invention includes an inorganic fiber aggregate of the inorganic fibers of the present inventions or an inorganic fiber aggregate produced by the method of producing an inorganic fiber aggregate of the present invention. As described in the section (1), the holding sealing material including an inorganic fiber aggregate of high friction inorganic fibers can have a high surface pressure.
(4) The exhaust gas purifying apparatus of the present invention includes a casing, an exhaust gas-treating body, and a holding sealing material. The holding sealing material is the holding sealing material of the present invention. The exhaust gas purifying apparatus of the present invention, which includes an inorganic fiber aggregate of high friction inorganic fibers as a holding sealing material, has good holding properties for the exhaust gas-treating body owing to a high surface pressure of the holding sealing material.

### EXAMPLES

Hereinafter, the present invention is more specifically described by way of examples which, however, are not intended to limit the scope of the present invention.

### (Example 1)

### [Production of inorganic fiber aggregate]

An aqueous solution of basic aluminum chloride having an Al content of 70 g/L and a ratio of Al:C1 = 1:1.8 (atomic ratio) was prepared. The aqueous solution was mixed with silica sol such that inorganic fibers after firing should have a composition ratio of Al₂O₃:SiO₂ = 72:28 (weight ratio). An adequate amount of an organic polymer (polyvinyl alcohol) is then added to the mixture. Thereby, a mixed solution was prepared.

The resulting mixed solution was concentrated to provide a mixture for spinning. The mixture was spun by a blowing method into inorganic fiber precursors having an average fiber length of 100 mm and an average fiber diameter of 5.1 µm.

Subsequently, the obtained inorganic fiber precursors were compressed to prepare a continuous sheet-like product.

The obtained sheet-like product was continuously subjected to a needle-punching with a needle board having needles attached thereto at a density of 21 needles/cm². Thereby a needling-treated body was prepared.

The needling-treated body was cut to a size of 150 mm × 150 mm to prepare an inorganic fiber precursor sheet.

The inorganic fiber precursor sheet thus prepared was degreased and fired in a heating furnace.

The inorganic fiber precursor sheet was arranged in the heating furnace and degreased at a sheet temperature-increasing rate at the internal center of the inorganic fiber precursor sheet of 39°C/min at a temperature of 800°C. The sheet was then held at 1200°C for 30 minutes to be fired. Thereby, an inorganic fiber aggregate was produced.

The produced inorganic fiber aggregate had a weight per unit area of 1400 g/m² and a thickness of 7.5 mm.

### [Observation of surface of inorganic fiber]

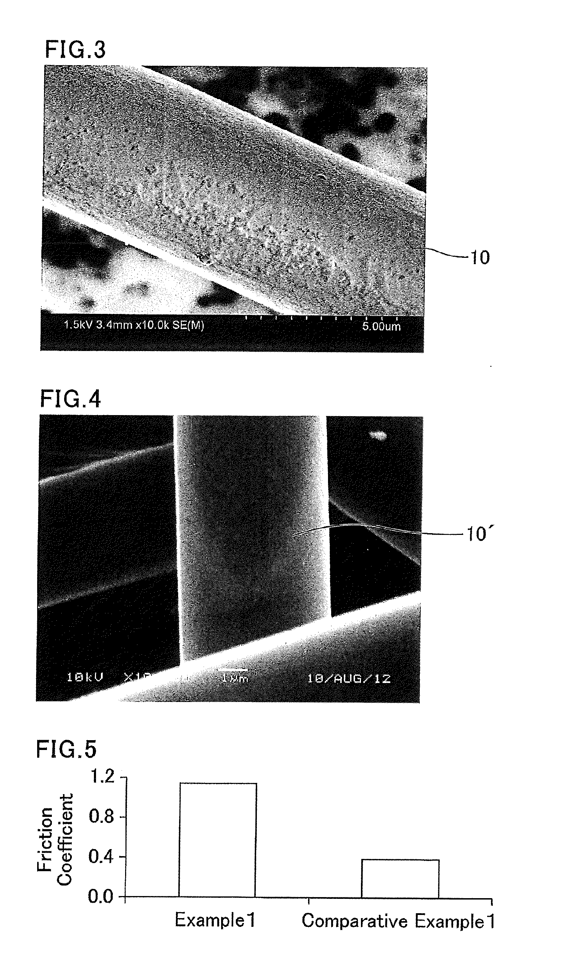

The surface condition of the inorganic fibers constituting the produced inorganic fiber aggregate was observed with an electron scanning microscope (SEM, JSM-6380 produced by JEOL Ltd. the same shall apply hereinafter) . Fig. 3 shows a SEM image of an inorganic fiber of Example 1.

### [Measurement of friction coefficient of surface of inorganic fiber]

The friction coefficient of the surface of the inorganic fibers was measured by the following method.

An inorganic fiber was taken with tweezers from the produced inorganic fiber aggregate and placed under a scanning probe microscope (SPM-9700 produced by SHIMADZU Corp. The same shall apply hereinafter).

Subsequently, a cantilever (OMCL-RC800PSA-W produced by Olympus Corp. The same shall apply hereinafter) was set in the scanning probe microscope. AFM measurement and LFM measurement were performed.

Normal force N on the surface of the inorganic fiber was measured by the AFM measurement and frictional force (lateral force) was measured by the LFM measurement. The friction coefficient µ was calculated from the normal force N and the frictional force F in accordance with the equation "µ = F/N". The friction coefficient of the surface of the inorganic fibers of Example 1 was found to be 1.14.

### [Measurement of arithmetic average roughness of surface of inorganic fiber]

The arithmetic average roughness Ra of the surface of the inorganic fibers was measured by the AFM measurement. The arithmetic average roughness of the surface of the inorganic fibers of Example 1 was found to be 4.3 nm.

### [Measurement of surface pressure]

An evaluation sample was prepared from the produced inorganic fiber aggregate. The surface pressure was measured with the sample and a universal tester (produced by INSTRON Corp.).

First, 30 g of fibers were taken from the produced inorganic fiber aggregate and opened by a wet method with a mixer so that the fibers had a fiber length of 0.1 to 5.0 mm.

The fibers thus opened was mixed with 6 L of water and stirred with a stirrer. The mixture was then mixed with 10.0 g of Lx-852 (produced by Zeon Corp.) as an organic binder and with 1.0 g of DISPERAL P2 (produced by Sasol Japan KK.) as an inorganic binder, followed by additional stirring. Thereafter, 10 g of a 0.5 wt% solution of PERCOL47 (produced by BASF Corp.) was added as a flocculant to the mixture, followed by stirring. Thereby, a mixture was prepared.

Subsequently, the mixture was poured into a mold having a mesh for filtering (mesh size: 30 mesh) formed on the bottom thereof. The water in the mixture was removed through the mesh and thereby a material sheet having a size of 150 mm × 150 mm was obtained.

The obtained material sheet was taken out of the mold and then compressed with a press machine to a thickness of 8 mm while heat-dried at 150°C. Thereby, a sheet-formed sheet was obtained.

The sheet-formed sheet was cut to a size of 25 mm × 25 mm and then heated in a heating furnace at 600°C for 1 hour so that the organic components were removed. Thereby, an evaluation sample was prepared.

The evaluation sample was set in a universal tester to perform a compression-restoration cycle test. The sample was compressed at room temperature at a rate of 1 mm/min until the GBD of the sample reached 0.38 g/cm³. Thereafter, the load was released at a rate of 1 mm/min until the GBD of the evaluation sample decreased to 0.33 g/cm³. This cycle was repeated 10 times. The load at which the GBD of the sample last reached 0.33 g/cm³ was measured. The surface pressure (kPa) was determined by dividing the load value by the area of the evaluation sample.

The gap bulk density (GBD) of the evaluation sample can be determined according to the following equation: "bulk density = the weight of the evaluation sample/ (the area of the evaluation sample × the thickness of the evaluation sample)."

The surface pressure of the inorganic fiber aggregate of Example 1 measured in this method was 73.1 kPa.

### [Relation between inorganic particle content and surface pressure]

The surface pressure of the produced inorganic fiber aggregate with inorganic particles attached thereto was measured. The relation between the inorganic particle content and the surface pressure was studied.

Four evaluation samples were prepared from the inorganic fiber aggregate. Each of the samples was immersed in DISPERSAL P2 (produced by Sasol Japan KK.) containing bohemite particles so that the four samples had inorganic particle contents (the amount of inorganic particles attached to the surface of the inorganic fibers) of 0% by weight, 0.5% by weight, 1.0% by weight, and 3.0% by weight. The samples were then dried.

Thereafter, the surface pressures of the evaluation samples were measured by the above method with the universal tester. The samples having inorganic particle contents of 0% by weight, 0.5% by weight, 1.0% by weight, and 3.0% by weight were found to have surface pressures of 73.1 kPa, 77.9 kPa, 75.8 kPa, and 74.3 kPa, respectively.

### (Comparative Example 1)

Alumina silica fibers (trade name: M-Fil, produced by Saffil Ltd.) were used as inorganic fibers.

### [Observation of surface of inorganic fiber]

The surface condition of the inorganic fibers was observed in the same manner as in Example 1 with an electron scanning microscope. Fig. 4 shows an SEM image of inorganic fibers of Comparative Example 1.

### [Measurement of friction coefficient of surface of inorganic fiber]

The friction coefficient of the surface of the inorganic fibers was measured in the same manner as in Example 1. The friction coefficient of the surface of the inorganic fibers of Comparative Example 1 was found to be 0.39.

Fig. 5 shows the friction coefficient of the surface of the inorganic fibers of Example 1 and Comparative Example 1.

### [Measurement of arithmetic average roughness of surface of inorganic fiber]

The arithmetic average roughness Ra of the surface of the inorganic fibers was measured in the same manner as in Example 1. The arithmetic average roughness Ra of the surface of the inorganic fibers of Comparative Example 1 was found to be 2.1 nm.

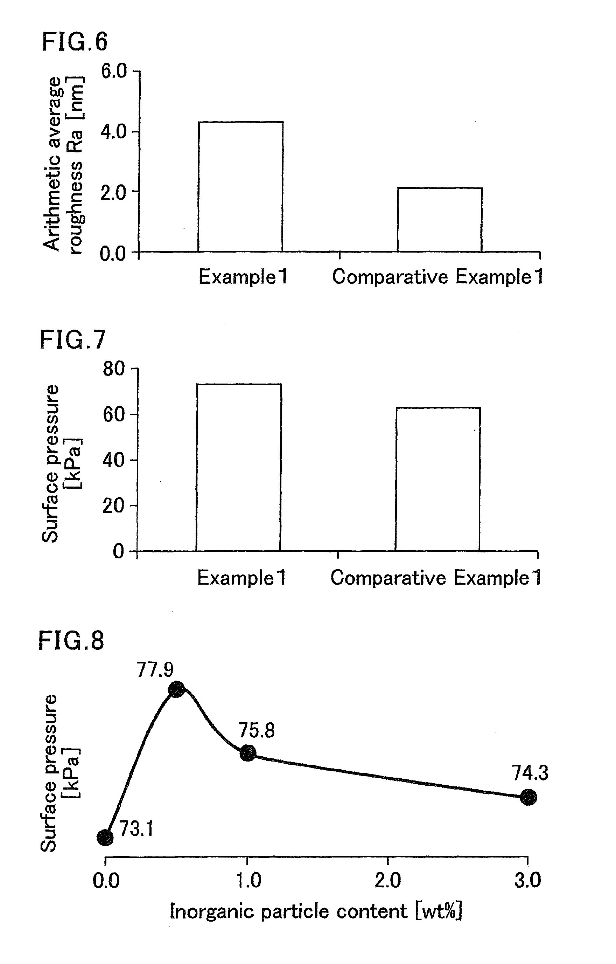

Fig. 6 shows the arithmetic average roughness of the surface of the inorganic fibers of Example 1 and Comparative Example 1.

### [Measurement of surface pressure]

An amount of 30 g of alumina silica fibers (produced by Saffil Ltd.) were mixed with 6 L of water and stirred with a stirrer. The mixture was then mixed with 10.0 g of Lx-852 (produced by Zeon Corp.) as an organic binder, followed by additional stirring. Thereafter, 10 g of a 0.5 wt% solution of PERCOL47 (produced by Sasol Japan KK.) as a flocculant was added, followed by stirring. Thereby, a mixture was prepared.

Subsequently, the mixture was poured into a mold having a mesh for filtering (mesh size: 30 mesh) formed on the bottom thereof. The water in the mixture was removed through the mesh and thereby a material sheet having a size of 150 mm × 150 mm.

The obtained material sheet was taken out of the mold and then compressed with a press machine to a thickness of 6 mm while heat-dried at 150°C. Thereby, a sheet-formed sheet was obtained.

The sheet-formed sheet was cut to a size of 25 mm × 25 mm and then heated in a heating furnace at 600°C for 1 hour so that the organic components were removed. Thereby, an evaluation sample was prepared.

The surface pressure of the obtained evaluation sample was measured in the same manner as in Example 1. The surface pressure of the inorganic fiber aggregate of the Comparative Example 1 was found to be 62.8 kPa.

Fig. 7 shows the surface pressure of the inorganic fiber aggregates of Example 1 and Comparative Example 1.

As shown in Fig. 3, irregularities were formed on the surface of the inorganic fiber 10 in Example 1. On the other hand, the inorganic fibers 10' of Comparative Example 1 had a smooth surface, as shown in Fig. 4. Figs. 5 and 6 indicate that the friction coefficient of the surface of the inorganic fibers of Example 1 was 0.5 or greater and the arithmetic average roughness of the surface of the inorganic fibers was 3 nm or higher. From Fig. 7, it is shown that an increase in the friction coefficient of the surface of the inorganic fibers increases the surface pressure.

Fig. 8 shows relation between the inorganic particle content and the surface pressure. Fig. 8 indicates that the inorganic fiber aggregate of inorganic fibers having a surface having a friction coefficient of 0.5 or greater has a high surface pressure when 0.01 to 1.0% by weight of inorganic particles, based on 100% by weight of the inorganic fibers, are attached to the inorganic fiber aggregate. The surface pressure presumably reaches its maximum when the amount of inorganic particles attached is around 0.5% by weight. In contrast, the surface pressure is not significantly increased if 3.0% by weight of inorganic particles are attached.

It is an essential feature of the inorganic fibers of the present invention that the friction coefficient of the surface of the inorganic fibers is 0.5 or greater, the friction coefficient being measured with a scanning probe microscope. It is an essential feature of the method of producing an inorganic fiber aggregate of the present invention that the heating step includes degreasing followed by firing, the degreasing being performed at a sheet temperature-increasing rate at the internal center of the inorganic fiber precursor sheet of 30°C/min or higher. It is an essential feature of the holding sealing material of the present invention that the holding sealing material includes an inorganic fiber aggregate of the inorganic fibers of the present invention or an inorganic fiber aggregate produced by the method of producing an inorganic fiber aggregate of the present invention. It is an essential feature of the exhaust gas purifying apparatus of the present invention that the gas purifying apparatus includes the holding sealing material of the present invention.

The desired effect can be achieved by appropriately combining the essential feature with various structures described in the Description of Embodiments (e.g., the structure of the inorganic fibers, the production conditions of the inorganic fiber aggregate, the structure of the holding sealing material, the production conditions of the holding sealing material, the structure of the exhaust gas purifying apparatus).

### REFERENCE SIGNS LIST

10, 10': inorganic fiber
20: holding sealing material
30: exhaust gas purifying apparatus
31: exhaust gas-treating body (honeycomb filter)
32: casing

## Claims

1. Inorganic fibers configured to constitute a holding sealing material intended to be used in an exhaust gas purifying apparatus,
the inorganic fibers having a surface having a friction coefficient of 0.5 or greater, the friction coefficient being measured using a scanning probe microscope.

2. The inorganic fibers according to claim 1,
wherein the inorganic fibers have a surface having an arithmetic average roughness Ra of 3 nm or greater.

3. The inorganic fibers according to claim 1 or 2,
wherein the inorganic fibers comprise alumina fibers.

4. A method of producing an inorganic fiber aggregate of the inorganic fibers according to any one of claims 1 to 3, the method comprising the steps of:
arranging, in a heating furnace, an inorganic fiber precursor sheet including a sheet-like aggregate of inorganic fiber precursors; and
heating the inorganic fiber precursor sheet in the heating furnace,
the step of heating including degreasing followed by firing, the degreasing being performed at a sheet temperature-increasing rate at the internal center of the inorganic fiber precursor sheet of 30°C/min or higher.

5. The method according to claim 4,
wherein the step of heating includes continuously heating the inorganic fiber precursor sheet by conveying the inorganic fiber precursor sheet through the heating furnace by a transport mechanism.

6. The method according to claim 4 or 5,
wherein the step of arranging includes arranging the inorganic fiber precursor sheet in the heating furnace such that air current generated by the heating in the furnace should pass through the furnace contacting a surface of the inorganic fiber precursor sheet.

7. The method according to any one of claims 4 to 6,
wherein the inorganic fiber precursor is spun from a spinning liquid containing basic aluminum chloride, a silicon compound, an organic polymer, and water.

8. A holding sealing material intended to be used in an exhaust gas purifying apparatus, the sealing material comprising:
an inorganic fiber aggregate of the inorganic fibers according to any one of claims 1 to 3; or
an inorganic fiber aggregate produced by the method according to any one of claims 4 to 7.

9. The holding sealing material according to claim 8, further comprising inorganic particles.

10. The holding sealing material according to claim 9,
wherein the holding sealing material comprises the inorganic particles in an amount of 0.01 to 3.0% by weight based on 100% by weight of the inorganic fibers.

11. An exhaust gas purifying apparatus comprising:
a casing;
an exhaust gas treating-body housed in the casing; and
a holding sealing material wound around the exhaust gas-treating body and disposed between the exhaust gas-treating body and the casing,
the holding sealing material being the holding sealing material according to any one of claims 8 to 10.
